(19) Europäisches Patentamt
European Patent Office
Office européen des brevets

(11) **EP 2 336 734 A1**

(12) **EUROPEAN PATENT APPLICATION**

(43) Date of publication:
**22.06.2011 Bulletin 2011/25**

(51) Int Cl.:
***G01F 23/00*** (2006.01)   ***G01F 23/38*** (2006.01)

(21) Application number: **10194041.9**

(22) Date of filing: **07.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.12.2009 US 637914**

(71) Applicant: **Delphi Technologies, Inc.**
**Troy, MI 48007 (US)**

(72) Inventors:
• **Schastok, Manfred B.**
**Cottles Bridge, Victoria 3099 (AU)**

• **Alamgir, Muhammad**
**Sunshine, Victoria 3020 (AU)**
• **Terzic, Edin**
**Rowville, Victoria 3178 (AU)**

(74) Representative: **Denton, Michael John et al**
**Delphi France SAS**
**Legal Staff**
**64, avenue de la Plaine de France**
**BP 65059 Tremblay en France**
**95972 Roissy CDG Cedex (FR)**

(54) **Programmable electronic circuit to process a halleffect signal for use in a liquid level sensor**

(57)    A system and method for measuring liquid levels is provided. The system includes a sensing device disposed within an enclosure comprising a liquid therein, the sensing device generates a raw signal indicative of a surface level of the liquid in the enclosure; and an programmable device circuit in signal communication with the sensing device, the programmable device circuit samples and processes the raw signal producing a variation in voltage at an output of the programmable device circuit, the variation in voltage emulates a variable resistor at the output of the programmable device circuit.

FIG. 4

## Description

TECHNICAL FIELD

Conventional resistive type liquid level sensors use a float with a mechanical coupling to move one or more electrical contacts over a track of a variable resistor, providing a resistance value which correlates to a liquid level. This type of sensor requires two wires to communicate the signal to the instrument cluster.

BACKGROUND OF THE INVENTION

However, there are common problems with this design. These problems include mechanical wear of both the movable contact fingers and the conductive track, eletromechanical reactions between contacts and resistive track, depending on the material of contacts and resistive track, the electrical current and also the composition of the liquid. These problems and others can lead usually to the deterioration of the electrical signal over time.

SUMMARY OF THE INVENTION

These and other advantages and features will become more apparent from the following description taken in conjunction with the drawings.

The invention is about a system for measuring liquid levels, the system comprising a sensing device disposed within an enclosure comprising a liquid therein. The sensing device generates a raw signal indicative of a surface level of the liquid in the enclosure; and a device circuit in signal communication with the sensing device, the device circuit samples and processes the raw signal producing a variation in voltage at an output of the device circuit, the variation in voltage emulates a variable resistor at the output of the device circuit. The device circuit includes a voltage regulator in signal communication with the sensing device. The voltage regulator regulates voltage from a power source supplying power to a pump within the enclosure and supplies the regulated voltage to the sensing device. The device circuit is programmed and calibrated via a link to the power source supplying power to the pump. The device circuit further includes a microprocessor coupled to the sensing device, the microprocessor generates a set of pulse width modulated (PWM) signals based on the raw signal from the sensing device. The set of PWM signals includes a coarse PWM signal and a fine PWM signal, the coarse PWM signal and the fine PWM signal operably increase the resolution of the variable resistor at the output of the device circuit. The device circuit includes a signal driver circuit coupled to a filtration circuit. The signal driver circuit includes a first transistor device and a second transistor device configured to receive the set of PWM signals respectively generating a variation voltage signal across a resistive element of the output signal driver circuit, the variation voltage signal is filtered through the filtration circuit. The device circuit includes a resistance emulation circuit coupled to the filtration circuit. The resistance emulation circuit includes a comparator configured to receive the filtered variation voltage signal and drive a third transistor device producing the variation in voltage at the third transistor device, the third transistor device provides the output of the device circuit. The device circuit further includes a unity gain operational amplifier circuit configured to reduce interference and noise at the output of the device circuit. The sensing device includes at least one magnet and a Hall element to form a contact-less sensing arrangement. More specifically, the enclosure is a fuel tank of a vehicle and the device circuit is disposed within the enclosure.

The invention is also related to a system for measuring liquid levels in a vehicle. The system comprises a Hall-effect sensor disposed within an enclosure comprising a liquid therein. The Hall-effect sensor generates a raw signal indicative of a surface level of the liquid in the enclosure; and a device circuit in signal communication with the Hall-effect sensor, the device circuit samples and processes the raw signal producing a variation in voltage at an output of the device circuit, the variation in voltage emulates a variable resistor at the output of the device circuit. The device circuit includes a voltage regulator in signal communication with the Hall-effect sensor, the voltage regulator regulates voltage from a power source supplying power to a pump within the enclosure and supplies the regulated voltage to the Hall-effect sensor. The device circuit is programmed and calibrated via a link to the power source supplying power to the pump. The device circuit includes a microprocessor coupled to the sensing device, the microprocessor generates a set of pulse width modulated (PWM) signals based on the raw signal from the Hall-effect sensor, the set of PWM signals includes a coarse PWM signal and a fine PWM signal, the coarse PWM signal and the fine PWM signal operably increase the resolution of the variable resistor at the output of the device circuit. The device circuit includes a signal driver circuit coupled to a filtration circuit, the signal driver circuit includes a first transistor device and a second transistor device configured to receive the set of PWM signals respectively generating a variation voltage signal across a resistive element of the output signal driver circuit, the variation voltage signal is filtered through the filtration circuit. The device circuit includes a resistance emulation circuit coupled to the filtration circuit, the resistance emulation circuit includes a comparator configured to receive the filtered variation voltage signal and drive a third transistor device producing the variation in voltage at the third transistor device, the third transistor device provides the output of the device circuit.

The invention is also related to a method for measuring liquid levels, comprising the steps of generating a raw signal indicative of a surface level of a liquid in an enclosure; sampling and processing the raw signal utilizing a device circuit; and producing a variation in voltage at an output of the device circuit, the variation in voltage emulates a variable resistor at the output of the device circuit. A Hall-effect sensor generates the raw signal and is disposed within the enclosure. The method of further comprises the steps of generating a set of pulse width modulated (PWM) signals based on the raw signal; driving a first transistor device and a second transistor device with the set of PWM signals respectively generating a variation voltage signal across a resistive element; filtering the variation voltage signal; and driving a third transistor device, the third transistor device produces the variation in voltage at the third transistor device, the third transistor devices provides the output of the device circuit. The enclosure of said method is a fuel tank of a vehicle.

BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 is a schematic of a vehicle with a device circuit to process a raw signal indicative of the liquid level in an enclosure accordance with one exemplary embodiment of the present invention;

FIG. 2 is a schematic of the device circuit in accordance with one exemplary embodiment of the present invention;

FIG. 3 is schematic of a resistance emulation circuit of the device circuit as compared to a resistive type liquid level sensor circuit in accordance with one exemplary embodiment of the present invention; and

FIG. 4 is a functional block diagram of the device circuit in accordance with one exemplary embodiment of the present invention.

DESCRIPTION OF THE PREFERRED EMBODIMENT

Exemplary embodiments are directed to a method for measuring liquid levels in an enclosure (e.g., fuel tank of a vehicle) by using a contact-less sensing arrangement. Exemplary embodiments of the contact-less sensing arrangement implement a sensing device that generates a voltage or current signal proportional to the level of a liquid (e.g., fuel) in the enclosure being measured. In one non-limiting embodiment, the sensing device includes a Hall element and one or more magnets forming a contact-less sensing arrangement. As such, contact wear and electro-chemical reactions are eliminated. Of course, other displacement type sensors can be used in other exemplary embodiments. Exemplary embodiments are also directed to a programmable electronic circuit configured to sample and process a voltage or current signal indicative of the surface level of a liquid in an enclosure (e.g., fuel tank of a vehicle). The exemplary embodiments of a programmable electronic circuit described herein are further configured to process the voltage or current signal and emulate a variable resistor as an output signal of the programmable electronic circuit. In one embodiment, the output signal is fed to an instrument cluster using an existing vehicle wiring arrangement or a vehicle wiring arrangement designed to accommodate a liquid level variable resistance sensor. Thus, existing resistive type liquid level sensors can be replaced without modification to the existing vehicle architecture.

For all general purposes, the term "signal" as used herein is defined as any electrical signal or any stored or transmitted value. For example, a signal can comprise a voltage, or a current. Further, a signal can comprise any stored or transmitted value such as binary values, scalar, values, or the like.

As used herein, the term "controller" or "microcontroller" refers to an application specific device circuit (ASIC), and electronic circuit, a processor (shared, dedicated, or group) and memory that executes one or more software or firmware programs/algorithms, a combinational logic circuit, and /or other suitable components that provide the described functionality.

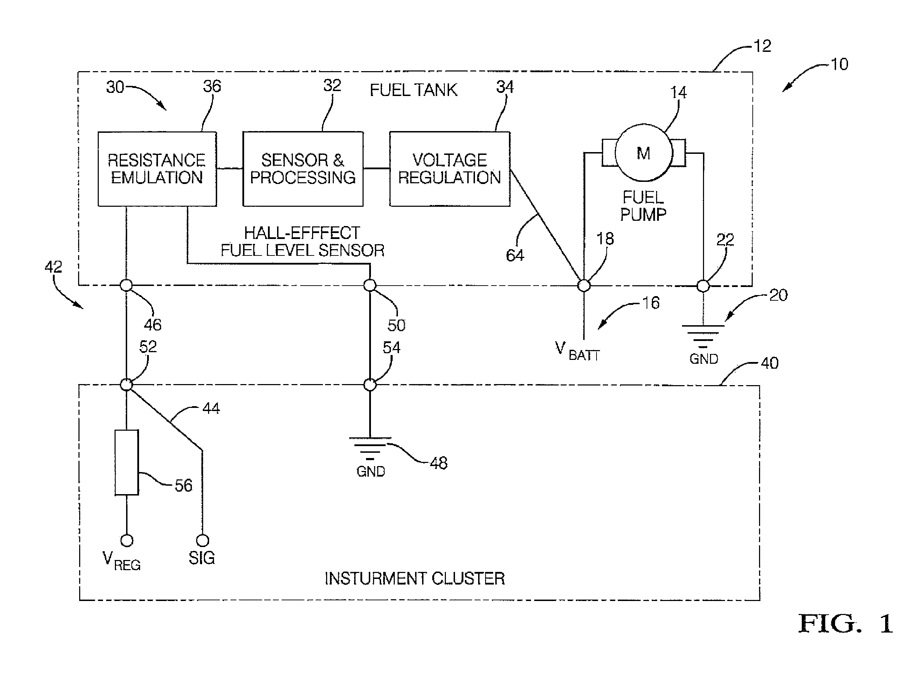

Now referring to the drawings, FIG. 1 illustrates a vehicle 10 having an enclosure 12 and a pump 14. The enclosure 12 comprises a liquid therein. The pump 14 is disposed within the enclosure 12 and is coupled to a power source 16 via a connection pin 18 of the enclosure 12. The pump 14 is also coupled to a ground 20 via another connection pin 22 of the enclosure 12.

In accordance with one non-limiting embodiment, the enclosure 12 is a fuel tank containing fuel. It is contemplated that the enclosure can be any type of enclosure comprising any liquid type in the vehicle 10 or any other system/apparatus and should not be limited to the configuration described herein. However, for ease of discussion, exemplary embodiments will be discussed in the context of a fuel tank containing fuel in a vehicle.

In accordance with one embodiment, a device circuit or electronic circuit 30 is disposed within the enclosure 12. Of course, the device circuit or components thereof can be positioned outside the enclosure 12 in other exemplary embodiments and should not be limited to the configuration described herein. The device circuit 30 receives a raw signal (e.g., voltage or current signal) indicative of the surface level of the fuel in the fuel tank 12 and samples and processes the raw signal to produce a variation in voltage at an output of the device circuit 30 that is used to emulate a variable resistor at the output. In other words, the variation in voltage at the output of the device circuit 30 reflects the same output voltage as across a variable resistor normally used in such application. This enables for the calculation of a resistance value as the output signal, which conventional resistive-type liquid level fuel sensors provide.

The device circuit 30 generally comprises a sensor and processing circuit component 32, a voltage regulation circuit component 34, and a resistance emulation circuit component 36. The device circuit 30 is selectively coupled to an instrument cluster or cluster panel 40 via an interface 42 between the enclosure 12 and the instrument cluster 40. Specifically, the device circuit is coupled to a signal line 44 of the instrument cluster via signal pin 46 and a common ground 48 at the instrument cluster via a ground pin 50. The signal pin 46 and the ground pin 50 of the enclosure 12 complement a signal pin 52 and a ground pin 54 of the instrument cluster respectively. A pull-up resistive element 56 sits in the instrument cluster in order to measure a voltage across the variable resistor, which is coupled in series with the pull-up resistive element 56. The instrument cluster is generally a tool or device located on the vehicle side to collect measurement data (e.g., fuel level).

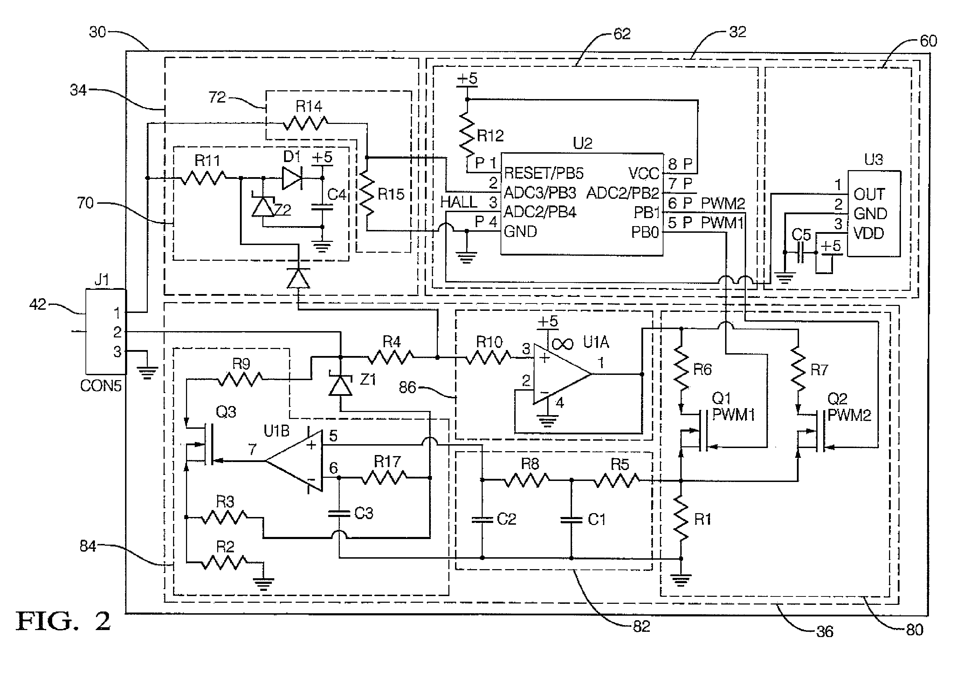

FIG. 2 illustrates the circuit components of the device circuit 30 in accordance with one exemplary embodiment. The sensor and processing circuit component 32 generally includes a sensing device 60 and a microcontroller 62. The sensing device 60 is in signal communication with the microcontroller 62. In one non-limiting embodiment, the sensing device 60 is an integral part of the device circuit 30 as shown in FIGS. 1 and 2. In an alternative embodiment, the sensing device 60 is separate from the device circuit 30. For example, one or more components of the device circuit 30 can be positioned outside the fuel tank 12.

The sensing device 60 is configured to generate a raw signal or a raw Hall-signal indicative of a surface level of the fuel in the fuel tank 12. In one non-limiting embodiment, the sensing device 60 is a Hall-sensor that includes one or more magnets and a Hall element used to measure the surface level of liquid in the fuel tank 12. Of course, other sensing devices, such as, for example, capacitive or ultrasonic sensors, configured to generate a raw voltage or current signal indicative of the surface level of liquid in the fuel tank can be used in other exemplary embodiments.

Generally speaking, the magnets can be arranged so that they rotate around the stationary Hall element in response to the change in the surface level of the fuel in the fuel tank 12. For example, the magnets can be part of a moving float/float arm assembly and change in their positions relative to the Hall element corresponding to the level of the fuel. The Hall element measures a magnetic field generally perpendicular to the Hall-element and produced by the magnets. The strength of the magnetic field is proportional to the swing angle of the moving assembly, which is proportional to the liquid level. The change in Hall-effect voltage can have any shape (e.g., sine, cosine, linear), depending on the arrangement of the magnets relative to the Hall element. Thus, the sensing device 60 generates an output indicative of this change in surface level through its output pin 1. The output is an analog signal sent to the microcontroller 52 for processing. Sensing device 60 is coupled to ground 48 and the voltage regulator 32 via pin 2 and pin 3 respectively. The use of this Hall-effect fuel level sensor eliminates contact wear and electro-chemical reactions found in mechanical resistive-type liquid level sensors.

The sensing device 60 can also be any type of displacement sensor used for determining both linear and angular displacements in accordance with other exemplary embodiments. However, for ease of discussion, exemplary embodiments herein are discussed in the context of liquid level sensors. For example, the sensing device 60 can be used in other applications such as pedal position, throttle valve in engine compartment, sitting posture angle on seats etc.

The microcontroller 62 is configured to receive and process the raw signal (voltage or current signal) from the sensing device 60. In one embodiment, the microcontroller 62 receives the raw signal from the sensing device at pin 3 and samples and processes the raw signal. The microcontroller 62 generates an output of a set of pulse width modulated (PWM) signals based on the raw signal. The PWM signals are correspondingly sent from pin 5 and pin 6 of the microcontroller 62 for further processing. In one embodiment, the set of PWM signals includes a coarse PWM signal (PWM1) and a fine PWM signal (PWM2).

The microcontroller 62 can be any conventional processing unit configured for carrying out the methods and/or functions described herein. In one exemplary embodiment, the microcontroller 62 comprises a combination of hardware and/or software/firmware with a computer program that, when loaded and executed, permits the microcontroller 62 to operate such that it carries out the methods described herein.

The voltage regulation circuit component 34 generally comprises a voltage regulator 70 and a calibration trigger circuit 72. The voltage regulator 34 is in signal communication with the sensing device 60 and microcontroller 62 for powering the same. In one embodiment, the voltage regulator 70 is coupled to the power source 18 via connection pin 18, which is generally indicated in FIG. 2 as pin 1 of interface 42. In other words, the voltage regulator 34 taps into the same power source supplying power to the pump 14. In an alternate embodiment, the voltage regulator 70 receives power from a power source (not shown) separate from power source 18. The voltage regulator 70 operably regulates voltage supplied from power source 18 and supplies the regulated voltage (+5V) to the sensing device 60, the microprocessor 62 and other components of the device circuit 30 as shown. The voltage regulator 70 ensures the sensing device 60 and other components of the device circuit 30 receive a steady supply of power. The voltage regulator 70 can be any conventional voltage regulator. In this example, the voltage regulator has a diode D1 serially coupled with a capacitor C4 and coupled in parallel with a zenor diode Z2. The diode D1 is further coupled to a resistor R11. Of course, the voltage regulator 70 can have varying configurations and should not be limited to the configuration described herein.

The calibration trigger circuit 72 is in signal communication with the microcontroller 62. The calibration trigger circuit 72 includes a set of resistors (R14 and R15) serially coupled to each other. The calibration trigger circuit 72 enables an operator to program and calibrate the microcontroller 62 to process the raw signal received by the sensing device 60 to a desired output signal. In other words, the calibration trigger circuit 72 enables the operator to shape the curve of the output signal to any desired shape, thereby satisfying differing customer needs. For example, the operator can trim the output resistance to a particular level. Therefore, a low resistance can indicate a full fuel tank 12 and a high resistance can indicate an empty fuel tank 12 and vice versa. In one embodiment, the microprocessor 62 can be programmed and calibrated via a link 64 to the power source 16 using a sequence of code. In one embodiment, the microcontroller is programmed and calibrated at pin 2. As such, the customer can obtain a signal characteristic that is either linear over swing angle or linear over liquid level (which takes the geometry of the float arm assembly into account), or linear over volume (which takes the geometry of the float arm and the shape of the tank into account). Therefore, the programmable microcontroller can transform the raw signal to the desired output-signal used for the resistance emulation, which is described in more detail below.

The resistance emulation circuit component 36 generally comprises a signal driver circuit 80, low-pass filter 82, a resistance emulation circuit 84, and a unity gain operational amplifier circuit 86. Briefly stated, the resistance emulation circuit component 36 takes the PWM signals indicative of the surface level of the liquid in the fuel tank 12 and processes the signals to emulate a resistance as output signal.

The signal driver circuit 80 generally includes a resistor R6 serially coupled to a transistor device or first transistor device Q1, which are coupled in parallel with a resistor R7 serially coupled to a transistor device or second transistor device Q2. The PWM signals (PWM1 and PWM2) drive the transistor devices Q1 and Q2 respectively generating a variation signal across a resistor R1 of the signal driver circuit 80. As such, the PWM signals driving the transistor device Q1 and Q2 control the current across resistor R1. The use of a course and fine PWM signal across R1 improves the output resistance resolution even from an ordinary microcontroller having 8 bits or 10 bits processing resolution.

The low-pass filter 82 coupled to the resistor R1 filters the variation signal across resistor R1 reducing PWM currents and keeping electrical noise to a low level. The low-pass filter 82 can be any conventional low-pass filtration circuit for reducing noise. In this example, the low-pass filter circuit includes a resistor R5 serially coupled to a capacitor C1, which are coupled in parallel with a resistor R8 serially coupled to a capacitor C2.

In accordance with one embodiment, the filtered signal is received by the resistance emulation circuit 84. The resistance emulation circuit 84 includes a comparator U1B that drives the output transistor device or third transistor device Q3. The comparator U1B has a non-inverting input pin 5 and an inverting input pin 6, which is coupled to a resistor R17 and capacitor C3. The comparator U1B operably reduces the magnitude of the filtered signal reducing electrical emission that may exist within the device circuit. The comparator U1B takes the filtered signal and compares it with a reference voltage across resistor R2. Specifically, the comparator U1B applies the voltage at pin 6 across resistor R2 and generates the precise current in R2 to match the voltage required to generate the resistance value of a variable resistor. The output current required (across R2) for the variable resistor is generated as 1/100$^{th}$ of the output current in R1 in accordance with one embodiment. The output of the comparator U1B drives the gate of the transistor device Q3 producing a variation in voltage or current at the transistor device Q3. Hence, a variable voltage or variation in voltage is produced at the output of transistor device Q3, which reflects the same output voltage as across a variable resistor normally used in variable resistive-type fuel level sensors. Resistors R2 and R9 are coupled in series with the transistor device Q3. Resistor R9 is further coupled to a resistive element R4 of the device circuit. When the instrument cluster is coupled to fuel tank via interface 42, a voltage drop across R9 down to resistor R2 to ground is measured. The variation in voltage or output current from transistor device Q3 and the variation in voltage at the gate coming from comparator U1B can emulate a variable resistor at the transistor device Q3 of the resistance emulation circuit 74.

In one embodiment, the resistance value of the variable resistor is calculated by equation 1:

$$R_{Level} = \frac{V_{R_{Level}} \times R1C}{5 - V_{R_{Level}}} \quad \text{(equation 1)}$$

In this equation, the resistance level or value is a function of the variation in voltage ($V_{R_{Level}}$) at the output of the transistor device Q3 or across resistor R9 and R2, the resistance of resistive element 56 in the instrument cluster (R1C), and the regulated voltage (5+). As such the resistance emulation circuit can provide the same signal to the customer using this Hall-effect level sensor as provided by a resistive-type fuel level sensor.

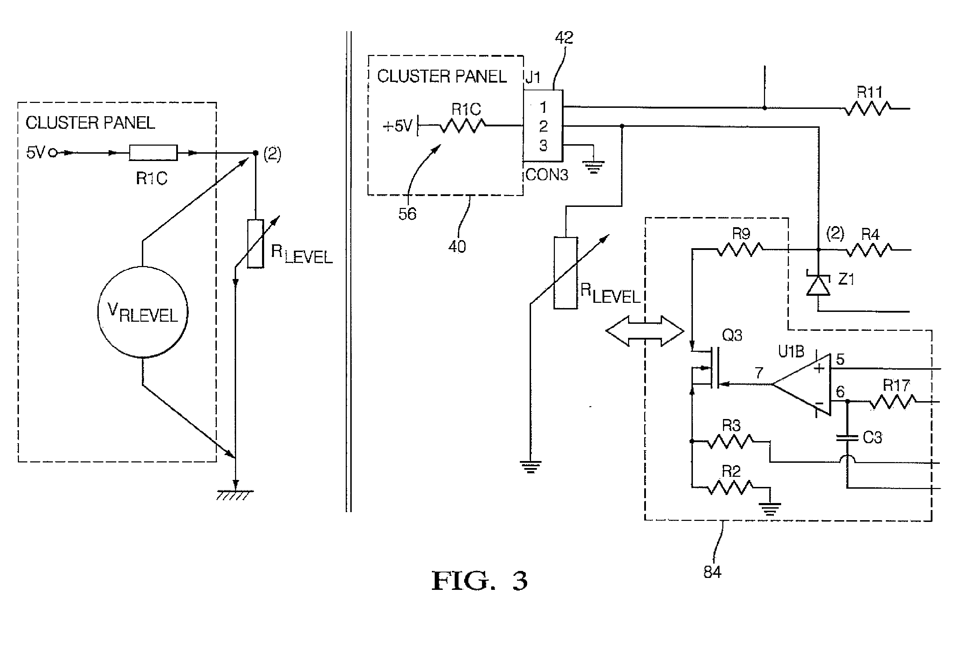

Referring now to FIG 3, the resistance emulation circuit 84 is set up such that the variation in voltage at the output transistor device Q3 or across resistor R9 down to resistor R2 to ground can be used to emulate a variable resistor with resistance value (R$_{Level}$). As such, the customer can receive the same signal from the resistance emulation circuit 84 shown on the right of FIG.

3 as provided with resistive type liquid level sensors as shown on the left of FIG. 3. The resistance value of the variable resistor can be calculated using equation 1. Specifically, a voltage measurement is taken across resistor R9 down to resistor R2 to ground. This voltage signal is taken at pin 2 of interface 42. This voltage signal along with the resistance value of resistive element 56 in the cluster panel 40 enables for the calculation of the resistance value of the variable resistor using equation 1.

Referring back to FIG. 2, the unity gain operational amplifier circuit 86 is a virtual isolation block between the cluster panel 40 and the device circuit 30. The unity gain operational amplifier circuit 86 operably reduces the noise or interference that might exist in the pump 14 and in the output signal wire coupled with the cluster panel 40. The unity gain operational amplifier circuit 86 includes an operational amplifier U1A with a non-inverting pin 3 coupled to a resistive element R10 and an inverting pin 2 coupled to the output of the operational amplifier U1A. In one embodiment, the unity gain operational amplifier driving the output transistor device Q3 runs in a linear mode due to the high level of filtering at its high resistance input at pin 3. As a result, the output has no ripples. The operational amplifier U1A provides feedback voltage across resistors R6 and R7 to provide the correct current in R1 and voltage at pin 6 of the comparator U1B. The unity gain operational amplifier 86 functions in feedback mode by transferring the output signal back to the PWM area also reduces PWM ripples on the output. In one embodiment, the operational amplifier U1A is powered by the voltage regulator 70.

In accordance with one embodiment, circuit protection diodes Z1 D2 are implemented for accidental high positive or transient negative voltages across the variable resistor. Of course, other means for protecting the device circuit from accidental voltages can be used and should not be limited to the configuration as shown.

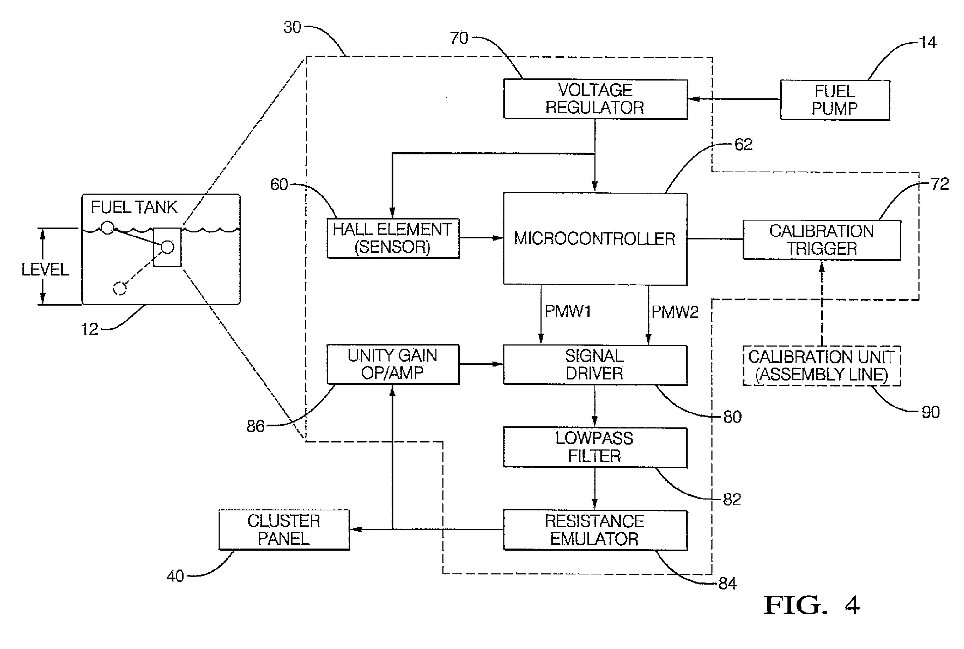

FIG. 4 is a functional block diagram of the device circuit 30 in accordance with one exemplary embodiment. As illustrated, the device circuit is disposed within the fuel tank 12 and is in signal communication with the pump 14 and the cluster panel 40. Of course, the sensing device 60 can be disposed within the fuel tank 12 while the other components of the device circuit 30 are positioned outside the fuel tank 12. In operation, the sensing device 60 generates a raw signal indicative of the surface level of fuel in the fuel tank 12. The microcontroller 62 receives the raw signal from the sensing device 60. The microcontroller 62 generates a set of PWM signals (a course PWM signal and a fine PWM signal) based on the raw signal. The microcontroller 62 can be calibrated and programmed via the calibration trigger circuit 72, which can be coupled to a conventional calibration unit 90 used for the manufacturing process. Next, the signal driver circuit 80 receives the PWM signals and generates a variation voltage signal across a resistive element of the signal driver circuit 80. Then, the low-pass filter 82 filters the variation voltage signal to reduce PWM currents and keep electrical noise to a very low. The resistance emulation circuit 84 takes the filtered variation voltage signal and drives the gate of transistor device Q3 with a comparator U1B to produce a variation in current from the transistor device Q3. This variation in current from the output of the transistor device Q3 and the variation in the voltage at the gate coming from comparator U1B enable the customer to emulate a variable resistor at the output of the resistance emulation circuit 84. The resistance value of the variable resistor can be calculated utilizing equation 1.

It should be understood that the transistors devices Q1, Q2, and Q3 described herein can be any type of field effect transistor (FET) or metal-oxide-semiconductor field-effect transistor (MOSFET). Of course, other structurally complex FETs are known in the art may be used in exemplary embodiments of the present invention.

## Claims

1. A system for measuring liquid levels, **characterized in that** it comprises:

   a sensing device disposed within an enclosure (12) comprising a liquid therein, the sensing device generates a raw signal indicative of a surface level of the liquid in the enclosure; and
   a device circuit (30) in signal communication with the sensing device, the device circuit (30) samples and processes the raw signal producing a variation in voltage at an output of the device circuit, the variation in voltage emulates a variable resistor at the output of the device circuit (30).

2. The system of claim 1, wherein the device circuit (30) includes a voltage regulator (34) in signal communication with the sensing device, the voltage regulator (34) regulates voltage from a power source supplying power to a pump (14) within the enclosure (12) and supplies the regulated voltage to the sensing device.

3. The system as set in any of the preceding claim, wherein the device circuit (30) is programmed and calibrated via a link to the power source supplying power to the pump (14).

4. The system as set in any of the preceding claim, wherein the device circuit (30) includes a microprocessor (62) coupled to the sensing device, the microprocessor (62) generates a set of pulse width modulated (PWM) signals based on the raw signal from the sensing device.

5. The system of claim 4, wherein the set of PWM signals includes a coarse PWM signal and a fine PWM signal, the coarse PWM signal and the fine PWM signal operably increase the resolution of the variable resistor at the output of the device circuit.

6. The system as set in any of the claim 4 or 5, wherein the device circuit (30) includes a signal driver circuit (34) coupled to a filtration circuit, the signal driver circuit (34) includes a first transistor device and a second transistor device configured to receive the set of PWM signals respectively generating a variation voltage signal across a resistive element of the output signal driver circuit, the variation voltage signal is filtered through the filtration circuit.

7. The system of claim 6, wherein the device circuit (30) includes a resistance emulation circuit (36) coupled to the filtration circuit, the resistance emulation circuit (36) includes a comparator configured to receive the filtered variation voltage signal and drive a third transistor device producing the variation in voltage at the third transistor device, the third transistor device provides the output of the device circuit.

8. The system as set in any of the preceding claim, wherein the device circuit (30) further includes a unity gain operational amplifier (86) circuit configured to reduce interference and noise at the output of the device circuit (30).

9. The system as set in any of the preceding claim, wherein the sensing device (30) includes at least one magnet and a Hall element to form a contactless sensing arrangement.

10. The system as set in any of the preceding claim, wherein the enclosure (12) is a fuel tank of a vehicle (10).

11. The system as set in any of the preceding claim, wherein the device circuit (30) is disposed within the enclosure (12).

12. A method for measuring liquid levels, comprising:

   generating a raw signal indicative of a surface level of a liquid in an enclosure (12);
   sampling and processing the raw signal utilizing a device circuit (30); and
   producing a variation in voltage at an output of the device circuit (30), the variation in voltage emulates a variable resistor at the output of the device circuit (30).

13. The method of claim 12, wherein a Hall-effect sensor generates the raw signal and is disposed within the enclosure (12).

14. The method as set in any of the claim 12 or 13, further comprising:

   generating a set of pulse width modulated (PWM) signals based on the raw signal;
   driving a first transistor device and a second transistor device with the set of PWM signals respectively generating a variation voltage signal across a resistive element;
   filtering the variation voltage signal; and
   driving a third transistor device, the third transistor device produces the variation in voltage at the third transistor device, the third transistor devices provides the output of the device circuit.

15. The method as set in any of the claim 12 to 14, wherein the enclosure (12) is a fuel tank of a vehicle (10).

FIG. 1

EP 2 336 734 A1

FIG. 2

EP 2 336 734 A1

**FIG. 3**

FIG. 4

Europäisches
Patentamt

European
Patent Office

Office européen
des brevets

## EUROPEAN SEARCH REPORT

Application Number

EP 10 19 4041

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/217366 A1 (TANAKA KENICHI [JP] ET AL) 6 October 2005 (2005-10-06) * the whole document * | 1-15 | INV. G01F23/00 G01F23/38 |
| A | US 2006/266112 A1 (CRARY LYNWOOD F [US] ET AL) 30 November 2006 (2006-11-30) * paragraph [0024] * * figure 1 * | 2 | |
| A | US 5 483 109 A (GHOLSTON JEROME E [US]) 9 January 1996 (1996-01-09) * column 2, lines 35-48 * * figure 1 * | 2 | |
| A | DE 101 42 618 A1 (HELAG ELECTRONIC GMBH [DE]) 27 March 2003 (2003-03-27) * paragraphs [0023], [0039] * | 3 | |
| A | US 6 191 722 B1 (BRIEFER DENNIS K [US]) 20 February 2001 (2001-02-20) * column 3, line 49 - column 5, line 17 * * figures 2,3 * | 5,6 | TECHNICAL FIELDS SEARCHED (IPC) G01F H03M |
| A | US 7 298 309 B1 (WU SHUANG-CHIN [TW] ET AL) 20 November 2007 (2007-11-20) * column 3, lines 33-44 * * figure 2 * | 5,6 | |

The present search report has been drawn up for all claims

| Place of search | Date of completion of the search | Examiner |
|---|---|---|
| The Hague | 28 March 2011 | Kloppenburg, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 336 734 A1**

## ANNEX TO THE EUROPEAN SEARCH REPORT
## ON EUROPEAN PATENT APPLICATION NO.

EP 10 19 4041

28-03-2011

| Patent document cited in search report | | Publication date | Patent family member(s) | | Publication date |
|---|---|---|---|---|---|
| US 2005217366 | A1 | 06-10-2005 | DE 102005014169 | A1 | 13-10-2005 |
| | | | JP 4199149 | B2 | 17-12-2008 |
| | | | JP 2005274434 | A | 06-10-2005 |
| US 2006266112 | A1 | 30-11-2006 | BR PI0601921 | A | 13-02-2007 |
| | | | DE 102006024217 | A1 | 30-11-2006 |
| | | | JP 2006329980 | A | 07-12-2006 |
| | | | KR 20060121760 | A | 29-11-2006 |
| US 5483109 | A | 09-01-1996 | NONE | | |
| DE 10142618 | A1 | 27-03-2003 | NONE | | |
| US 6191722 | B1 | 20-02-2001 | NONE | | |
| US 7298309 | B1 | 20-11-2007 | NONE | | |

EPO FORM P0459